# EUROPÄISCHE PATENTSCHRIFT

(11) **EP 0 926 755 B1**
(45) Veröffentlichungstag und Bekanntmachung des Hinweises auf die Patenterteilung: **05.06.2002**
(21) Anmeldenummer: 97810906.4
(22) Anmeldetag: 25.11.1997
(51) Int. Cl.: H01M 8/04, H01M 8/24, H01M 8/06

(54) **Brennstoffzellenmodul mit integrierter Zusatzheizung**
Fuel cell modular arrangement with integral additional heating
Agencement modulaire de piles à combustible comportant un chauffage intégré supplémentaire

(43) Veröffentlichungstag der Anmeldung: 30.06.1999
(73) Patentinhaber: Sulzer Hexis AG, 8400 Winterthur (CH)
(72) Erfinder: Diethelm, Roland, 8494 Bauma (CH); Gamper, Thomas, 8219 Trasadingen (CH)
(74) Vertreter: Sulzer Management AG

(56) Entgegenhaltungen:
- EP-A- 0 654 838
- EP-A- 0 780 917
- EP-A- 0 818 840
- WO-A-94/18712
- DE-A- 4 217 892
- DE-C- 19 523 973
- FR-A- 1 149 229
- US-A- 3 146 131
- US-A- 3 485 676
- US-A- 3 718 506
- US-A- 4 683 177
- PATENT ABSTRACTS OF JAPAN vol. 012, no. 239 (E-630), 7.Juli 1988 & JP 63 029459 A (MITSUBISHI HEAVY IND LTD), 8.Februar 1988,

## Beschreibung

Die Erfindung betrifft einen Brennstoffzellenmodul mit integrierter Zusatzheizung gemäss Oberbegriff von Anspruch 1 sowie eine Anlage mit einem derartigen Brennstoffzellenmodul.

Aus den Patentanmeldungen EP-A 0 654 838 und EP-A 0 780 917 sind Vorrichtungen mit Brennstoffzellen bekannt, die Zusatzheizungen enthalten, mit denen bei einer Inbetriebnahme der Vorrichtung jeweils ein Prereformer auf Betriebstemperatur aufgeheizt wird. Die jüngere Anmeldung beschreibt eine Weiterentwicklung der in der älteren Anmeldung offenbarten Vorrichtung. Bei dieser Weiterentwicklung hat die Zusatzheizung zwei weitere Funktionen: a) Aufheizen von Luft, mit der bei einer Inbetriebnahme die Zellen vorgeheizt werden. b) Erzeugung von zusätzlicher Wärme für Heizzwecke während des Betriebs der Vorrichtung, wobei die Brennstoffzellen zur Erzeugung von elektrischer Energie sowie von Heizwärme eingesetzt werden.

Aufgabe der Erfindung ist es, eine weitere Vorrichtung mit Brennstoffzellen und integrierter Zusatzheizung zu schaffen, die sich besonders gut als Modul für Anlagen eignet, die je nach Bedarf aus verschiedenen Einheiten zusammengebaut werden können. Dabei sollen diese Anlagen für die simultane Erzeugung von elektrischer Energie und Heizwärme vorgesehen sein und es soll ein variabler Bedarf an Heizwärme mit separaten Brennern gedeckt werden, die jeweils als zusätzliche Einheit neben dem Brennstoffzellenmodul in die Anlage eingebaut werden. Diese Aufgabe wird erfindungsgemäss durch den in Anspruch 1 definierten Modul gelöst.

Der Brennstoffzellenmodul enthält eine integrierte Zusatzheizung für einen Anfahrbetrieb und und umfasst weiter folgende Komponenten: In Serie geschaltete planare Brennstoffzellen, die einen zylindrischen Stapel bilden, an dessen Seitenfläche sich Lufteinspeisestellen der Zellen befinden. Einen um den Zellstapel angeordneten Mantel, der radial luftdurchlässig als dynamische Wärmedämmung ausgebildet ist. Ferner einen Raum zwischen Zellstapel und Mantel, der für eine Nachverbrennung von aus den Zellen austretendem Gas sowie zum Abführen von Abgasen vorgesehen ist. Es sind Wärmequellen der Zusatzheizung an der Innenfläche des Mantels angeordnet. Während des Anfahrbetriebs wird die von der Zusatzheizung abgegebene Wärme zumindest teilweise durch einen radialen Luftstrom in die Brennstoffzellen eingetragen.

Bei diesem Brennstoffzellenmodul ist nur noch vorgesehen, dass mit der integrierten Zusatzheizung die für den Anfahrbetrieb benötigte Wärme geliefert wird. Es ist wie bei den vorbekannte Vorrichtungen möglich, die für das Aufheizen benötigte Wärme mittels einer Gasverbrennung bereitzustellen. Wenn ein Anschluss an das elektrische Netz zur Verfügung steht, was in der Regel der Fall ist, kann es praktischer sein, die Zusatzheizung als elektrische Heizung auszubilden.

Die abhängigen Ansprüche 2 bis 8 beziehen sich auf vorteilhafte Ausführungsformen des erfindungsgemässen Moduls. Gegenstand der Ansprüche 9 bis 12 ist eine Anlage, die einen erfindungsgemässen Modul enthält.

Nachfolgend wird die Erfindung anhand der Zeichnungen erläutert. Es zeigen:
- Fig. 1: einen Brennstoffzellenmodul gemäss der Erfindung mit elektrischer Zusatzheizung,
- Fig. 2: ein Detail zu einem erfindungsgemässen Modul mit einer Gas verbrennenden Zusatzheizung,
- Fig. 3: ein entsprechendes Detail für ein weiteres Ausführungsbeispiel, in Schrägbilddarstellung,
- Fig. 4: eine dritte Variante der Gas-Zusatzheizung und
- Fig. 5: eine schematische Darstellung einer Anlage, die den erfindungsgemässen Modul enthält.

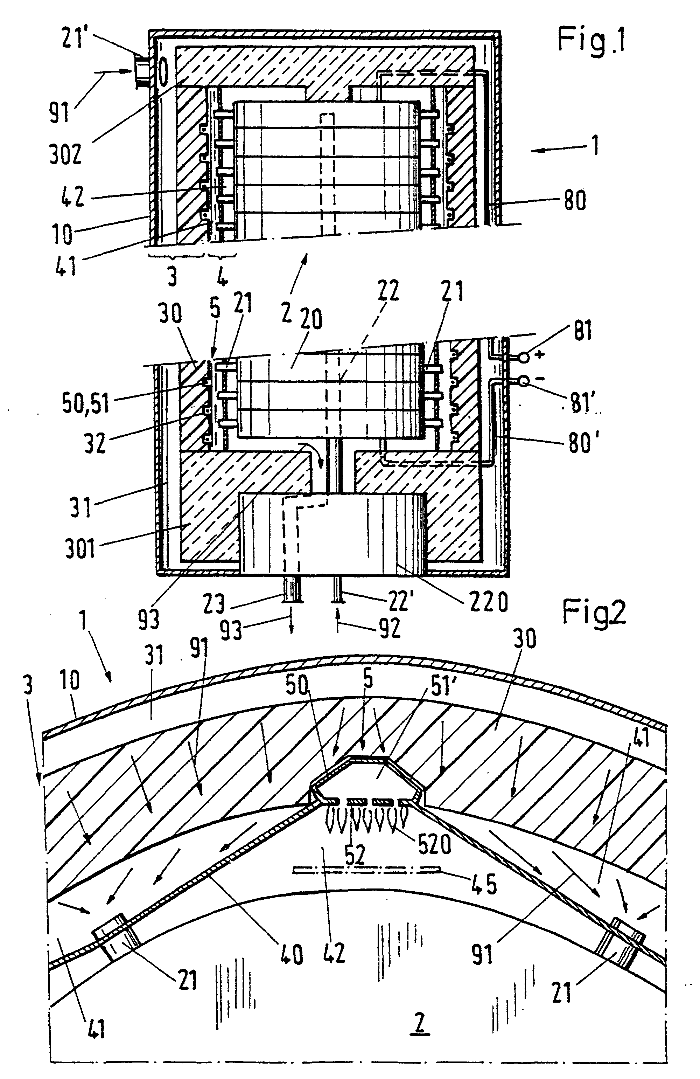

Der Brennstoffzellenmodul 1 in Fig.1 enthält in Serie geschaltete planare Brennstoffzellen 20, die einen zylindrischen Stapel 2 bilden, an dessen Seitenfläche sich Lufteinspeisestellen 21 der Zellen 20 befinden. Um den Zellstapel 2 ist ein Mantel 3 angeordnet, der in radialer Richtung luftdurchlässig ist und zwar so, dass er als eine dynamische Wärmedämmung wirkt: Wärme, die während des Betriebs von der heissen Oberfläche des Zellstapel 2 nach aussen abstrahlt, wird nach Absorption in einer Struktur 30 des Mantels 3, die aus einem offenporigen Material besteht, auf einen nach innen fliessenden Luftstrom übertragen und so zurück in den Zellstapel 2 transportiert.

In einem Raum 4 zwischen dem Zellstapel 2 und dem Mantel 3 wird während des Betriebs Gas verbrannt, das bei der elektrochemischen Reaktion in den Zellen nicht vollständig genutzt worden ist. Dieses Gas tritt zusammen mit Abgasen und parallel zu ausströmender Überschussluft aus den Zellen in einen Nachverbrennungsraum 42 ein, der durch eine Wand 40 von einem Luftraum 41 getrennt ist. Aus dem Nachverbrennungsraum 42 wird das Abgas 93, das nun auch die Verbrennungsprodukte der Nachverbrennung enthält, in einen Prereformer 220 geleitet, wo es die für eine Reformierung von frischem Gas 92 benötigte Prozesswärme abgibt. Das durch den Eintrittsstutzen 22' zugeführte Gas 92, das nach der Reformierung die reaktionsfähigen Stoffe Kohlenmonoxid und Wasserstoff enthält, wird über einen zentralen Kanal 22 in die Brennstoffzellen 20 verteilt. Das teilweise abgekühlte Abgas 93 verlässt schliesslich über einen Austrittsstutzen 23 den Modul 1. Die in dem Abgas 93 enthaltene Wärme kann nun noch zur Deckung eines Heizbedarfs genutzt werden.

Eine Aussenwand 10 des Moduls 1 bildet den äusseren Abschluss des Mantels 3. Luft 91 wird über einen Stutzen 21' in einen Hohlraum 31 zwischen der Wand 10 und der wärmedämmenden Struktur 30 eingespeist und dort verteilt, so dass sie gleichmässig über die gesamte Oberfläche der Struktur 30 radial zum Zellstapel 2 einströmen kann. Unterhalb des Zellstapels 2 sowie oberhalb sind Wärmedämmungen 301 bzw. 302 angeordnet, die nicht luftdurchlässig sind und somit nicht als dynamische Wärmedämmungen wirken.

Die Aussenwand 10 kann in Form eines evakuiierten Hohlkörpers als Wärmeisolation ausgebildet sein. Die zugeführte Luft 91 wird dann mit Vorteil vorgewärmt in den Raum 31 zwischen Aussenwand 10 und Struktur 30 eingebracht. Ein Vorerwärmung auf beispielsweise 400°C kann mit dem heissen Abgas 93 vorgenommen werden. Es sind auch andere Ausführungsformen der Aussenwand 10 sowie der Hülle 3 denkbar, bei denen eine Vorerwärmung der Luft 91 mit Vorteil vorgesehen wird (vgl. dazu die in der EP-A 0 814 526 (= P.6739) offenbarte Architektur eines Brennstoffzellenmoduls).

Eine Zusatzheizung 5 umfasst linear ausgebildete Wärmequellen 50, nämlich elektrische Heizdrähte 51, die an der Innenfläche des Mantels 3 gleichmässig in Nuten 32 der Wärmedämmstruktur 30 eingelegt sind. Die von den Heizdrähten 51 abgegebene Wärme wird teilweise durch den radialen Luftstrom in die Brennstoffzellen transportiert. Ein weiterer Teil der Heizwärme wird durch Strahlung auf die Trennwand 40 und von dort auf die Oberflächen der Zellen 20 übertragen. Die Heizdrähte 51 können beispielsweise gestreckt, d.h. der Krümmung der Nut 32 entsprechend gebogen sein; sie können auch eine Wendelform aufweisen. Die Heizdrähte 51 können auch eine andere Ausrichtung haben, beispielsweise in Richtung der Stapelachse.

Die in den Brennstoffzellen 20 erzeugte elektrische Energie lässt sich an zwei Polen 81, 81', die über Leitungen 80, 80' mit dem Zellstapel 2 verbunden sind, abnehmen.

Die Wärmequellen 50 der Zusatzheizung 5 können auch durch Kanäle 51' einer Gasheizung gebildet sein. Fig.2 zeigt in einem ausschnittsweise dargestellten Querschnitt durch den Modul 1 einen solchen Kanal 51', der in axialer Richtung, d. h. senkrecht zur Zeichenebene, orientiert ist. Über den Kanal 51' wird ein Gas/Luft-Gemisch zugeführt und an perforierten Seitenwänden 52 in Form von offenen Flammen 520 verbrannt.

Damit durch die Flamme 520 nicht eine zu hohe Temperatur auf dem Zellstapel 2 erzeugt wird, kann deren direkte Strahlung mit einer Platte 45, die in Fig.2 strichpunktiert angedeutet ist, abgeschirmt werden.

Der Verbrennungsraum 42 der Zusatzheizung 5 ist auch der Raum für die Nachverbrennung des während des Betriebs aus den Zellen austretenden Gases. Eine Trennwand 40 zwischen Räumen 41 und dem Nachverbrennungsraum 42 ist so ausgestaltet, dass sie die Elemente der Zusatzheizung 5 bildet. Die Räume 41 sind als Luftleiträume ausgebildet, in denen die durch die Struktur 30 einströmende Luft 90 zu Lufteinspeisestellen 21 geleitet wird. Der Nachverbrennungsraum 42 verbreitert sich nach innen, während die Luftleiträume 41 sich entsprechend verengen. Die einströmende Luft 91 wird zuerst in der porösen Struktur 30 des wärmedämmenden Mantels 3 vorgewärmt und dann an der heissen Wand 40 weiter aufgeheizt. Während einer Inbetriebnahme wird mit der aufgeheizten Luft Wärme in den Zellstapel 2 eingetragen und dabei die Zellen 20 auf die nötige Betriebstemperatur aufgeheizt. Die Luft gelangt anschliessend in den Verbrennungsraum 42 und strömt von dort zusammen mit den Abgasen der Zusatzheizung 5 in den Prereformer 220 (siehe Fig.1), der durch dieses Gasgemisch ebenfalls auf Betriebstemperatur aufgeheizt wird.

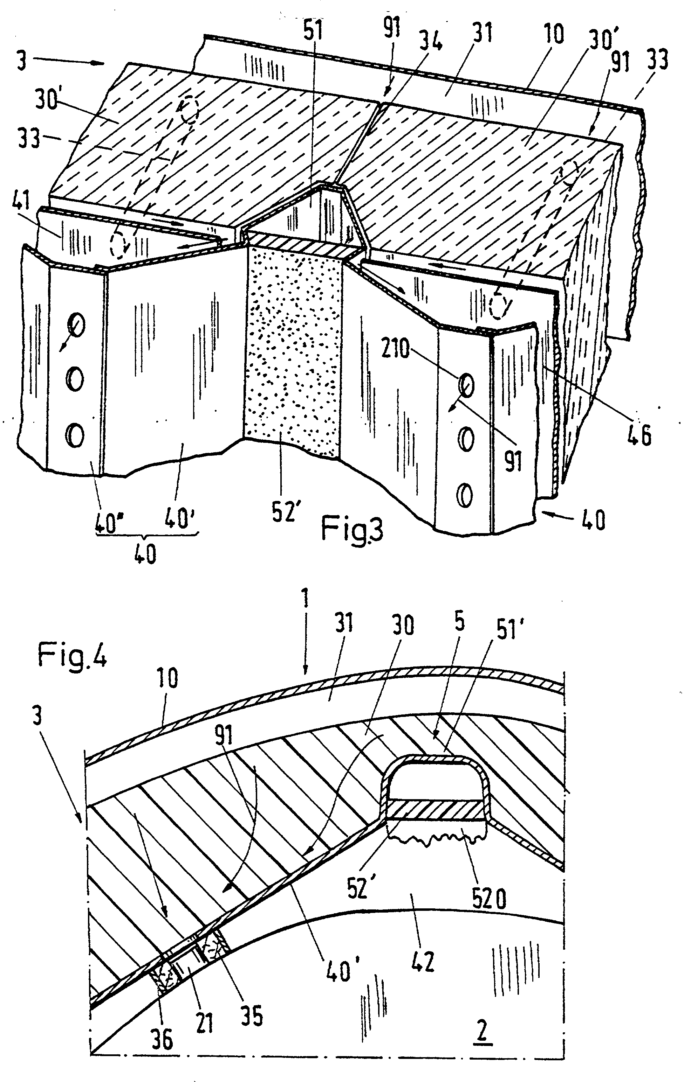

Die Schrägbilddarstellung der Fig.3 zeigt eine Variante zur Gas-Zusatzheizung der Fig.2. Die Wärmedämmung des Mantels 3 setzt sich hier aus Elementen 30' zusammen, die aus einem luftundurchlässigen Material hergestellt sind. Die radiale Zufuhr der Luft 91 erfolgt über eine Vielzahl von Kanälen 33 und über Schlitze 34 an den Stossstellen zwischen benachbarten Elementen 30'. (Das Element 30' kann auch aus einem geschlossenen Zylinderring ohne radiale Schlitze 34 gebildet sein, der nur Kanäle 33 aufweist.) In den Lufträumen 41 sind senkrecht zu den radialen Kanälen 33 Bleche 46 angeordet, die einerseits eine Umlenkschikane für die zuströmende Luft 91 und andererseits eine Abschirmung gegen die von der Wand 40 nach aussen abgestrahlte Wärme darstellen. Diese Anordnung mit den Elementen 30' und Abschirmblechen 46 hat auch die Wirkung einer dynamischen Wärmedämmung.

Die Kanäle 51 für das Gas/Luft-Gemisch weisen statt einer perforierten Seitenwand eine Wand 52' auf, die aus einem offenporigen Material hergestellt ist. Die Wand 40 ist aus mehreren Teilstücken 40', 40" zusammengesetzt. Es sind nur Öffnungen 210 für Röhrchen für die Lufteinspeisestellen 21 (siehe Fig.2) gezeigt.

Das Ausführungsbeispiel der Fig.4 ist eine Weiterbildung des in Fig.2 dargestellten. Es unterscheidet sich im wesentlichen dadurch, dass die metallische Wand 40 durch eine Wand 40' aus keramischem Material ersetzt ist. Diese Variante lässt sich relativ einfach herstellen, indem die offenporige Keramikstruktur 30 geeignet geformt wird, nämlich so, dass der Luftraum 41 durch die Struktur 30 gefüllt ist, und indem auf der inneren Oberfläche der Struktur 30 mit keramischen Partikeln - als Schlicker aufgetragen und anschliessend eingebrannt - die Poren geschlossen werden. Beim Anschluss an die Lufteinspeisestelle 21 ist ein abdichtender Zylinderring 35 aus keramischen Filz angeordnet und zwar mit Vorteil in einer Fassung 36 in Form eines metallischen Rings. Auch die innere Wand des Kanals 51' ist aus der Beschichtung mit keramischem Material gebildet. Für die Verbrennung des zugeführten Heizmittels (Flamme 520) ist wie im Beispiel der Fig.3 eine Wand 52' aus offenporigem Material vorgesehen.

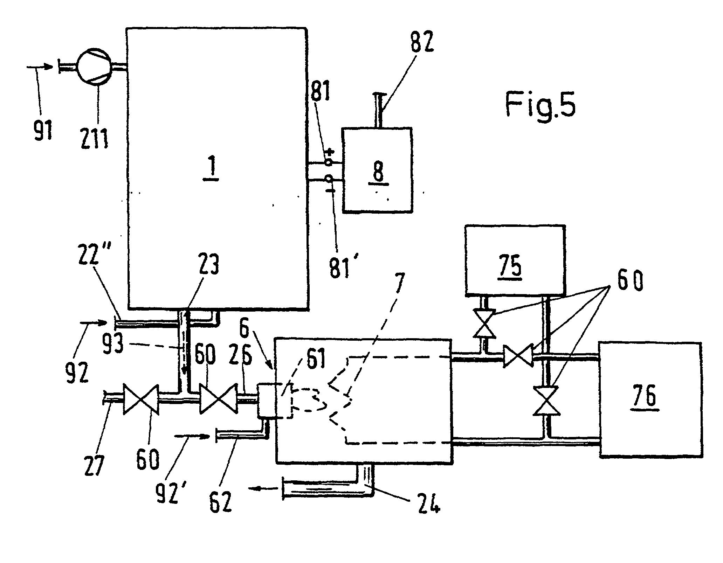

In Fig.5 ist eine Anlage 9 zur simultanen Erzeugung von elektrischer Energie und von Wärme für Heizzwecke dargestellt, die einen erfindungsgemässen Brennstoffzellenmodul 1 umfasst. Weitere Komponenten der Anlage 9 sind: Ein an die elektrischen Pole 81 und 81' des Moduls 1 angeschlossenes Gerät, mit dem erzeugter Gleichstrom in Wechselstrom umwandelbar ist und das über eine Leitung 82 an ein elektrisches Netz angeschlossen ist; ein zusätzliches Heizgerät 6 mit einem Brenner 61 sowie einem Wärmetauschersystem 7 für eine Energieabgabe an ein Wärmeträgermedium. Die Wärme kann an einen Brauchwassererwärmer 75 und/oder an ein Raumheizsystem 76 abgegeben werden. Das Heizgerät 6 ist an den Abgasstutzen 23 des Moduls 1 angeschlossen. Mit einem Gebläse 211 wird Luft 91 in den Modul 1 eingespeist. Zufuhr von Gas 92 und 92' erfolgt über eine Leitung 22" in den Modul 1 bzw. über eine Leitung 62 in den Brenner 61. Abgase, die einerseits aus den Brennstoffzellen 20 stammen und die andererseits im Brenner 61 entstehen, werden über eine Leitung 24 in einen nicht dargestellten Kamin geleitet.

Eine vom Modul 1 zum Heizgerät 6 führende Abgasleitung 26 ist an eine Lufteinspeisestelle des Brenners 61 angeschlossen. Die Abgasleitung verzweigt sich im Anschluss an den Stutzen 23 und vor der Lufteinspeisestelle des Brenners 61. Ein zweiter Zweig 27 der Abgasleitung führt beispielsweise zu einem separaten Wärmetauscher (nicht dargestellt), der Teil des Wärmetauschersystems 7 sein kann. Der Brenner 61 beheizt einen Wärmetauscher des Systems 7. Mit diversen Sperrorganen 60 lässt sich eine Vielfalt von Einsatzmöglichkeiten der Anlage 9 realisieren. In der europäischen Anmeldung Nr. 96810448.9 (= P.6743) sind verschiedene Schaltungsmöglichkeiten beschrieben, die auch mit der Anlage 9 realisierbar sind.

Die Anlage 9 kann auch so ausgebildet sein, dass im Brenner 61 statt Gas 92' Erdöl verbrennbar ist.

Analog kann gegebenenfalls auch für den Brennstoff des erfindungsgemässen Brennstoffzellenmoduls 1 die Verwendung eines flüssigen Stoffes vorgesehen sein. Dies ist möglich, wenn der Prereformer 220 (Fig.1) so ausgebildet ist, dass der flüssige Brennstoff - simultan oder in zwei aufeinanderfolgenden Verfahrensschritten - in Gasform gebracht sowie reformiert wird.

Falls der Bedarf an Heizwärme gering ist, kann anstelle des Heizgeräts 6 mit Brenner 61 lediglich ein Wärmetauschersystem 7 vorgesehen sein.

## Patentansprüche

1. Brennstoffzellenmodul (1) mit einer integrierten Zusatzheizung (5) für einen Anfahrbetrieb und mit
- in Serie geschalteten planaren Brennstoffzellen (20), die einen zylindrischen Stapel (2) bilden, an dessen Seitenfläche sich Lufteinspeisestellen (21) der Zellen (20) befinden,
- einem um den Zellstapel (2) angeordneten Mantel (3), der radial luftdurchlässig als dynamische Wärmedämmung ausgebildet ist,
- sowie einem Raum (4) zwischen Zellstapel und Mantel, der für eine Nachverbrennung von aus den Zellen austretendem Gas sowie zum Abführen von Abgasen (93) vorgesehen ist,
**dadurch gekennzeichnet, dass** die Zusatzheizung (5) Wärmequellen (50) umfasst, die an der Innenfläche des Mantels (3) angeordnet sind und deren abgegebene Wärme zumindest teilweise durch einen radialen Luftstrom (91) in die Brennstoffzellen (20) eintragbar ist.

2. Brennstoffzellenmodul nach Anspruch 1, **dadurch gekennzeichnet, dass** die Wärmequellen (50) der Zusatzheizung aus elektrischen Heizdrähten (51) gebildet sind, die insbesondere in einer Wendelform oder in einer gestreckten Form vorliegen können.

3. Brennstoffzellenmodul nach Anspruch 1, **dadurch gekennzeichnet, dass** die Wärmequellen (50) der Zusatzheizung durch Kanäle (51') gebildet sind, die für die Zufuhr eines Gas/Luft-Gemisches und dessen Verbrennung an perforierten oder offenporigen Seitenwänden (52, 52') der Kanäle vorgesehen sind.

4. Brennstoffzellenmodul nach einem der Ansprüche 1 bis 3, **dadurch gekennzeichnet, dass** die Elemente der Zusatzheizung, d.h. die Heizdrähte (51) bzw. die Kanäle (51'), in Nuten (32) der Innenfläche des Mantels (3) angeordnet sind.

5. Brennstoffzellenmodul nach einem der Ansprüche 1 bis 4, **dadurch gekennzeichnet, dass** zumindest ein Teil der luftdurchlässigen Teile (30) des Mantels (3) aus einem offenporigen Material gebildet sind.

6. Brennstoffzellenmodul nach einem der Ansprüche 1 bis 5, **dadurch gekennzeichnet, dass** für mindestens einen Teil des radialen Luftstroms besonders ausgebildete Kanäle (33) vorgesehen sind.

7. Brennstoffzellenmodul nach Anspruch 3, **dadurch gekennzeichnet, dass** zwischen dem Zellstapel (2) und dem Mantel (3) einerseits Verbrennungsräume (42) und andererseits den Lufteinspeisestellen (21) zugeordnete Luftleiträume (41) durch Trennwände (40) separiert sind, wobei die Verbrennungsräume (42) sich nach innen verbreitern und die Luftleiträume (41) sich entsprechend verengen.

8. Brennstoffzellenmodul nach Anspruch 5, **dadurch gekennzeichnet, dass** zwischen dem Zellstapel (2) und dem Mantel (3) Verbrennungsräume (42) durch Trennwände (40') von dem offenporigen Material der luftdurchlässigen Teile (30) des Mantels (3) separiert sind.

9. Anlage (9) mit einem Brennstoffzellenmodul (1) gemäss einem der Ansprüche 1 bis 8 zur simultanen Erzeugung von elektrischer Energie und von Wärme für Heizzwecke, **gekennzeichnet durch** ein an elektrische Pole (81, 81') des Zellenstapels (2) angeschlossenes Gerät (8), mit dem erzeugter Gleichstrom in Wechselstrom umwandelbar ist, und ein zusätzliches Heizgerät (6) mit einem Brenner (61) sowie einem Wärmetauschersystem (7) für eine Energieabgabe an ein Wärmeträgermedium, wobei das Wärmetauschersystem in Wirkverbindungen mit dem Brenner (61) und mit einem Abgasstrom (93) des Moduls (1) steht.

10. Anlage nach Anspruch 9, **dadurch gekennzeichnet, dass** eine vom Modul (1) zum Heizgerät (6) führende Abgasleitung (26) an eine Lufteinspeisestelle des Brenners (61) angeschlossen ist.

11. Anlage nach Anspruch 10, **dadurch gekennzeichnet, dass** die Abgasleitung sich vor der Lufteinspeisestelle des Brenners (61) verzweigt und dass ein zweiter Zweig (27) der Abgasleitung zu einem separaten Wärmetauscher führt.

12. Anlage nach Anspruch 9, **dadurch gekennzeichnet, dass** das Heizgerät (6) mit Brenner (61) durch ein Gerät mit lediglich einem Wärmetauschersystem (7) ersetzt ist.

## Claims

1. Fuel cell module (1) with an integrated additional heater (5) for a start-up operation and comprising
- planar fuel cells (20) which are connected in series and form a cylindrical stack (2) at the lateral surface of which air infeed points (21) of the cells (20) are located,
- a jacket (3) which is arranged about the cell stack (2) and is formed as a dynamic heat insulation in a manner radially permeable to air
- and a space (4) between the cell stack and the jacket which is provided for an afterburning of gas leaving the cell and for leading away exhaust gases (93)
**characterised in that** the additional heater (5) comprises heat sources (50) which are arranged at the inner surface of the jacket (3) and **in that** the heat given off by them can be introduced at least partially into the fuel cells (20) by a radial air flow (91).

2. Fuel cell module in accordance with claim 1, **characterised in that** the heat sources (50) of the additional heater are formed of electrical heating wires (51) which can in particular be present in a helical shape or in an extended shape.

3. Fuel cell module in accordance with claim 1 **characterised in that** the heat sources (50) of the additional heater are formed by passages (51') which are provided for the infeed of a gas/air mixture and its combustion at perforated or open pored side walls (52, 52') of the passages.

4. Fuel cell module in accordance with one of the claims 1 to 3 **characterised in that** the elements of the additional heater, i.e. the heating wires (51) or the passages (51') respectively are arranged in grooves (32) of the inner surface of the jacket (3).

5. Fuel cell module in accordance with one of the claims 1 to 4 **characterised in that** at least some of the parts (30) of the jacket (3) which are permeable to air are formed of an open pored material.

6. Fuel cell module in accordance with one of the claims 1 to 5 **characterised in that** specially formed passages (33) are provided for at least a portion of the radial air flow.

7. Fuel cell module in accordance with claim 3 **characterised in that**, between the cell stack (2) and the jacket (3), combustion chambers (42), on the one hand, and air conduction chambers (41) associated with the air infeed points (21), on the other hand, are separated by partition walls (40), with the combustion chambers (42) widening inwardly and the air conduction chambers (41) narrowing accordingly.

8. Fuel cell module in accordance with claim 5 **characterised in that** between the cell stack (2) and the jacket (3), combustion chambers (42) are separated by partition walls (40') from the open pored material of the air permeable parts (30) of the jacket (3).

9. Plant (9) comprising a fuel cell module (1) in accordance with one of the claims 1 to 8 for the simultaneous generation of electrical energy and of heat for heating purposes, **characterised by** an apparatus (8) connected to electrical poles (81, 81') of the cell stack (2) by means of which direct current which is generated can be converted to alternating current, and by an additional heating device (6) with a burner (61) and a heat exchanger system (7) for a transfer of energy to a heat transport medium, with the heat exchanger system being in active connection with the burner (61) and with an exhaust gas flow (93) from the module (1).

10. Plant in accordance with claim 9 **characterised in that** an exhaust gas line (26) leading from the module (1) to the heating device (6) is connected to an air infeed point of the burner (61).

11. Plant in accordance with claim 10 **characterised in that** the exhaust gas line branches off ahead of the air infeed point of the burner (61); and **in that** a second branch (27) of the exhaust gas line leads to a separate heat exchanger.

12. Plant in accordance with claim 9 **characterised in that** the heating device (6) with the burner (61) is replaced by a device with only one heat exchanger system (7).

## Revendications

1. Module de piles à combustible (1) avec un chauffage additionnel intégré (5) pour un fonctionnement de démarrage et avec
- des piles à combustible planes (20) montées en série, qui forment une pile cylindrique (2) à la face latérale de laquelle se trouvent des emplacements d'alimentation d'air (21) des piles (20),
- une enveloppe (3) disposée autour de l'empilage de piles (2) qui est réalisée avec une perméabilité radiale à l'air comme isolation thermique dynamique,
- et avec une enceinte (4) entre l'empilage des piles et l'enveloppe qui est prévue pour une post-combustion de gaz sortant des piles ainsi que pour l'évacuation de gaz d'échappement (93),
**caractérisé en ce que** le chauffage additionnel (5) comprend des sources de chaleur (50) qui sont disposées à la face intérieure de l'enveloppe (3) et dont la chaleur émise peut être introduite au moins partiellement par un flux d'air radial (91) dans les piles à combustible (20).

2. Module de piles à combustible selon la revendication 1, **caractérisé en ce que** les sources de chaleur (50) du chauffage additionnel sont constituées de filaments chauffants électriques (51) qui peuvent se présenter notamment sous une forme hélicoïdale ou sous une forme étendue.

3. Module de piles à combustible selon la revendication 1, **caractérisé en ce que** les sources de chaleur (50) du chauffage additionnel sont constituées par des canaux (51') qui sont prévus pour l'amenée d'un mélange de gaz/air et la combustion de celui-ci à des parois latérales (52, 52') perforées ou à alvéoles ouverts des canaux.

4. Module de piles à combustible selon l'une des revendications 1 à 3, **caractérisé en ce que** les éléments du chauffage additionnel, c'est-à-dire les filaments chauffants (51) respectivement les canaux (51') sont disposés dans des rainures (32)de la face intérieure de l'enveloppe (3).

5. Module de piles à combustible selon l'une des revendications 1 à 4, **caractérisé en ce qu'**au moins une partie des parties (30) perméable à l'air de l'enveloppe (3) est réalisée en un matériau à alvéoles ouverts.

6. Module de piles à combustible selon l'une des revendications 1 à 5, **caractérisé en ce que** des canaux (33) réalisés d'une manière particulière sont prévus pour au moins une partie du flux d'air radial.

7. Module de piles à combustible selon la revendication 3, **caractérisé en ce que**, entre l'empilage de piles (2) et l'enveloppe (3), d'une part, des enceintes de combustion (42) et, d'autre part, des enceintes de guidage d'air associées aux emplacements d'alimentation d'air (21) sont séparées par des parois de séparation (40), où les enceintes de combustion (42) s'élargissent vers l'intérieur et les enceintes de guidage d'air (41) rétrécissent d'une manière correspondante.

8. Module de piles à combustible selon la revendication 5, **caractérisé en ce que**, entre l'empilage de piles (2) et l'enveloppe (3), des enceintes de combustion (42) sont séparées par des parois de séparation (40') du matériau à alvéoles ouverts des parties (30) perméables à l'air de l'enveloppe (3).

9. Installation (9) avec un module de piles à combustible (1) selon l'une des revendications 1 à 8 pour la production simultanée d'énergie électrique et de chaleur à des fins de chauffage, **caractérisée par** un appareil (8) raccordé à des pôles électriques (81, 81') de l'empilage de piles (2), avec lequel le courant continu produit peut être transformé en courant alternatif, et un appareil de chauffage additionnel (6) avec un brûleur (61) ainsi qu'un système d'échangeur de chaleur (7) pour une émission d'énergie à un milieu caloporteur, où le système d'échangeur de chaleur est en liaison active avec le brûleur (61) et avec un flux de gaz d'échappement (93) du module (1).

10. Installation selon la revendication 9, **caractérisé en ce qu'**un conduit de gaz d'échappement (26) menant du module (1) à l'appareil de chauffage (6) est raccordé à un emplacement d'alimentation d'air du brûleur (61).

11. Installation selon la revendication 10, **caractérisée en ce que** le conduit de gaz d'échappement se ramifie en amont de l'emplacement d'alimentation d'air du brûleur (61), et **en ce qu'**une seconde branche (27) du conduit de gaz d'échappement mène à un échangeur de chaleur séparé.

12. Installation selon la revendication 9, **caractérisée en ce que** l'appareil de chauffage (6) avec le brûleur (61) est remplacé par un appareil avec seulement un système d'échangeur de chaleur (7).
